Europäisches Patentamt

(19) European Patent Office

Office européen des brevets

(11) **EP 0 916 870 B1**

(12) **EUROPEAN PATENT SPECIFICATION**

(45) Date of publication and mention
of the grant of the patent:
**03.11.2004   Bulletin 2004/45**

(21) Application number: **96931301.4**

(22) Date of filing: **01.08.1996**

(51) Int Cl.$^7$: **F16H 21/16**, F16H 21/30

(86) International application number:
**PCT/KG1996/000001**

(87) International publication number:
**WO 1998/005885 (12.02.1998 Gazette 1998/06)**

(54) **AXOID FORCE MECHANISM**

BEWEGUNGSUMWANDLUNG MIT WÄLZKÖRPER

MECANISME DE FORCE AXOIDIEN

(84) Designated Contracting States:
**AT BE CH DE DK ES FI FR GB IT LI SE**

(43) Date of publication of application:
**19.05.1999   Bulletin 1999/20**

(73) Proprietor: **Don, Evgenny Alexeevich
Bishkek, 720023 (KG)**

(72) Inventors:
• **DON, Evgenny Alexeevich
Bishkek, 720023 (KG)**
• **KIM, Florid Borisovich
Bishkek, 720025 (KG)**
• **KIM, Leonid Borisovich
Bishkek, 720066 (KG)**

(74) Representative: **Hano, Christian, Dipl.-Ing. et al
v. Füner Ebbinghaus Finck Hano
Mariahilfplatz 2 & 3
81541 München (DE)**

(56) References cited:
GB-A- 383 924          SU-A- 815 366
SU-A- 1 067 267        SU-A- 1 222 948
US-A- 3 916 700        US-A- 4 034 613

• WIDMAIER: "Atlas für Getriebe und
Konstruktionslehre: Band Schrauben- und
Radgetriebe" 1954 , KONRAD WITTWER ,
STUTTGART XP002173661 * page 78 *
• NICHOLAS P. CHIRONIS: "Gear-slider
mechanisms" PRODUCT ENGINEERING, 1
February 1965 (1965-02-01), pages 62-65,
XP002173659
• DR. ING. OSCAR THIERING: "Die Getriebe der
Textiltechnik" 1926 , JULIUS SPRINGER ,
BERLIN XP002173660 * page 6 - page 8; figure 6 *

EP 0 916 870 B1

**Description**

## BACKGROUND OF THE INVENTION

This invention relates to mashinery, precisely to mechanisms of mutual transformation of the force and speed parameters of progressive and rotary movements.

The lever mechnisms raising the forces by means the variable ratio within one work cycle and performing mutualy transformation of progressive and rotary movements, are widely used in technique (see Artobolevsky I.I. Theory of Mashines and Mechanisms, Moscow: "Science", 1975.

There exists the lever mechanism, Artobolevsky I.I. "The mechanisms in modern technique", Moscow: "Science", vol. 2, 1979, p. 15, example 872 which constitutes the closest prior art, consisting of an intermediate chain which is hinged with two end elements, which have a possibility for translational movements. Forces on the said end elements, speed of movement thereof and angular velocity of a mentioned intermediate chain in such mechanism are defined by following formulas:

$$P_2 = P_1 (\sin \alpha_1 / \sin \alpha_2) - \Delta P;$$

$$V_2 = V_1 (\cos \alpha_1 / \cos \alpha_2);$$

$$\omega = V_1 / (L \sin \alpha_1) = V2 / (L \sin \alpha_2); \qquad (1)$$

wherein: $P_2$, $P_1$ are forces on the end elements; $V_2$, $V_1$ are speeds thereof respectively; $\alpha_2$, $\alpha_1$ are angles between the flat containing the geometric axises of supporting surfaces of the end elements and directions of the end element movement; $\Delta P$ is a reduction of force due to friction, and $\omega$ is a angular velocity of the intermediate chain.

In such mechanisms the acting forces on the end elements may be balanced by torque acting on the intermediate chain in accordance with formula:

$$M + P_1 L \sin \alpha_1 + P_2 L \sin \alpha_2 + \Delta = 0;$$

where M is a torque on the intermediate chain; $\Delta$ is loss of force or torque due to friction, and other symbols are defined above.

Such mechanism, where by means of two force parameters the third unknown parameter can be defined, can be used as a mechanism for mutual transformation of progressive and rotative movements with respective transformation of forces and torques.

Without taking into consideration loss due to friction, the force on one of the end elements may be unlimitedly great while mechanism is in the certain position, whereas the force on the other end element or torque on the intermediate chain is limited.

However sliding on loaded supporting surfaces of the hinges causes their intensive wear-and-tear, expenses to maintain reability, and substantially reduses the force capability of mechanism. These deficiencies cause the use of more perfective antifriction materials, compound lubricating systems and use ball or roller bearings. But the hinges continue to be the most vulnerable parts of such mechnisms.

Therefore a matter of this invention is to reduce the losses and to raise force and speed capabilities of the mechanism of mutual transformation of the progressive and rotary movement by elimination of the friction in hinges.

## SUMMARY OF THE INVENTION

The analysis of function of contacting couples of the end elements and an intermediate chain in hinges shows that forces, which stretch and press the intermediate chain (further stretching and pressing forces), are perceived by the corresponding areas of the couples of the supporting surfaces of the end elements and the intermediate chain, which are divided by flats, perpendicular to direction of acting forces.

Elimination of sliding in the above defined areas is provided by inverting of each contacting couple of the supporting surfaces so, that these roll on each other without slipping when the end elements make mutually depended progressive movements. For reaching this the axis of mutual turning of the end element and the intermediate chain is replaced to the line of contact between supporting surfaces and become momentary axises of the turn. As geometric places of momentary axises of turning are axoids, contacting surfaces of all corresponding areas turn into axoids, which roll on each other without slipping and can perceive corresponding forces.

We have named the mechanism, which has been created by such inversion as "Axoid Force Mechanism" (so on in text AFM).

In the connections of AFM slipping is theoretically eliminated. Therefore wear-and-tear, loss of power, sensability to lubrication are substantially reduced. Force capacity and endurance are increased as a result of use the materials with high contact endurance for which the antifriction properties are not essential

An intermediate chain can consist of some contact elements, which may be placed either parallel one to other or as a succession thereof.

It is necessary that number of contact elements and radiuses of a supporting axoids curvature in the each succession thereof are corresponded to following formula for the end elements not to slip in the supporting while translational movement, including supporting axoids of end elements:

$$\prod_{j=1}^{k+1} \left( - \frac{\rho_{(2j-1)}}{\rho_{(2j)}} \right) = 1$$

wherein: **k** is number of contact elements in that succession; $\rho_{(2j-1)}$, $\rho_{(2j)}$ are curvature radiuses of the supporting surfaces in the area of **j**-th contact.

Construction of the supporting axoids of the end and the contact elements with ability to transmit the torque allows to provide the end elements with translational movement with necessary torque and to transform a rotative movement into a translational movement of the end elements, or to obtain the rotative movement from contact elements, transformed from translational movement of the end elements.

The circular cylinder surfaces are the most preferable for supporting axoids of AFM. If axises of all circular cylinder supporting axoids and the lines of their contact are placed in one flat, then such AFM has additional advantage that forces in contacts between supporting axoids do not aspire to push out contact elements or to cause slipping between supporting axoids.

It is awaited that AFM with a sole contact element for pressing loading should be the most useful because it is compact, simple and has high force capacities, however in accordance with type of prevailing forces various versions of combinations may be used:

Version 1: When prevailing pressing forces act on AFM, then there is preferable AFM with the contact element, which supporting surfaces are placed between supporting surfaces of the end elements with possibility to contact with them, for conceiving the grand pressing force, together with retaining element (e.g. lever) for conceiving the small stretching forces;

Version 2: When prevailing stretching forces act on AFM, then it is preferable AFM with the end elements, which supporting surfaces are placed between supporting surfaces of the contact element, for conceiving the grand stretching force, together with retaining element (e.g. lever) for conceiving the small pressing forces;

Version 3: When stretching and pressing forces are approximately equal, then AFM may include the contact elements of the both kind.

Each above version of AFM can have additional elements on supporting surfaces for conceiving torque, e.g. teeth.

Preferable embodiments of AFM with the circular cylinder supporting surfaces, the geometrical axis of which and lines of their mutual contacts are placed in the one flat, and the end elements of AFM have possibilities of the translational linear movement in mutual perpendicular directions, are shown below.

## BRIEF DESCRIPTION OF THE FIGURES

Fig. 1 shows AFM of the version 1 in position, when forces on the end elements are approximately equal.

Fig. 2 shows AFM of the version 2 in position, when forces on the end elements are approximately equal.

Fig. 3 shows AFM of the version 3 in position, when forces on the end elements are approximately equal.

Fig. 4 shows AFM of the version 1 in position, when the force on one of the end elements is maximum when the force on the other end element or torque on the contact element is confined.

Fig. 5 shows AFM of version 1 with possibility to receive a torque from the contact element, or to drive AFM by transmission of torque to the contact element.

Fig. 6 shows an example of use AFM in any mechsnism.

**DETAILED DESCRIPTION OF INVENTION**

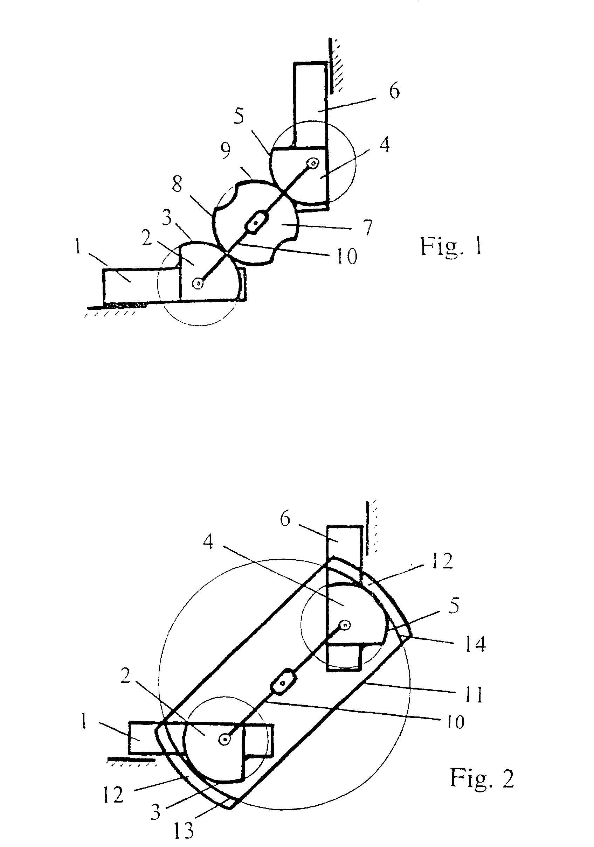

As shown in Fig. 1 the end element 1, which has opportunity of the translational movement from a drive (is not shown), is provided with a stock 2 with supporting surface 3 of circular cylinder form or its part. The end element 6, which has possibility of translational movement of direction perpendicular to direction of the end element 1 movement, is provided by similar stock 5 with supporting surface 4.

The intermediate chain as contact element 7 of circular cylinder form is placed between stocks 2 and 4. The part 8 of its supporting surface is in contact with the supporting surface 3 of the stock 2 and the other part 9 of the supporting surface is in contact with the supporting surface 5 of a stock 4. A contact element 7 is fixed between stocks 2 and 4 by retaining elements 10, which in this embodiment are hinged with axises of the stocks 2 and 4. As it is shown in Fig. 2 a contact element 11 is made as a unit of two plates 12 connected each with other, which are provided with cylinder supporting surfaces 13 and 14. The supporting surface 13 contacts with the supporting surface 3 of the stock 2 and the supporting surface 14 contacts with the supporting surface 5 of the stock 4.

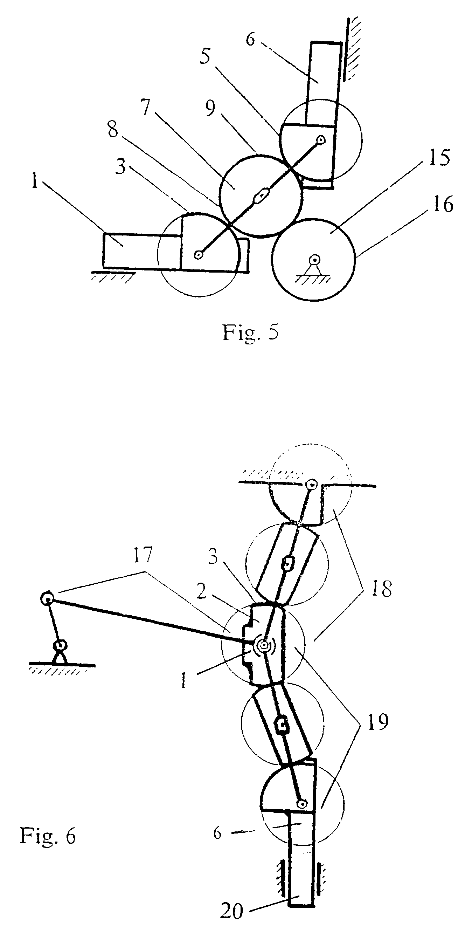

AFM with possibility of obtaining rotative movement from contact element 7 when the end elements 1 and 6 make progressive movement or when the contact element 7 is provided with the torque. This contact element additionally is provided with a drive element 15 (see Fig. 5), which contacts with the supporting surface 8 or 9 of the contact element 7 through the supporting surface 16. Supporting surfaces 3, 5, 8, 9, 16 or their parts may be provided by teeths (does not shown) with possibility to gear with each other.

AFM can be used, for example, as shown in Fig. 6. A crank mechanism 17 is connected with end element 1, which is provided by a stock 2 with the supporting surface 3 and is the first element of AFMs 18 and 19. The second end element of AFM 19 is rigitly connected to a frame. The second end element of a AFM 20 is provided by working element 20.

Force Axoidal Mechanism works as follow:

The force, which acts on the end element 1, moves it together with stock 2. Therefore contact element 7 by own supporting surface 8 rolls on supporting surface 3 of stock 2, and the supporting surface 9 transmits a movement from stock 2 to stock 4 by rolling of supporting surface 9 on the supporting surface 5. By that interaction the couples of the supporting surfaces 3 - 8 and 9 - 5 takes place as process of rolling without slipping.

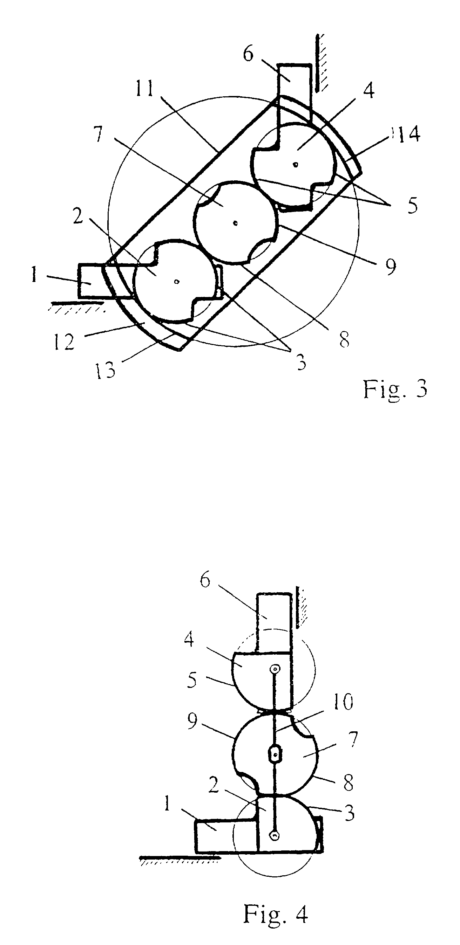

Fig. 4 shows a state of AFM where in accordance with formulas (1) a beed of an end element 6 strives to zero and force on an end element 6 is maximal whereas a force on end element 1 strives to zero.

When the end element 1 moves in the reverse direction, then the stock 2 drags the contact element 11 (see Figs. 2 or 3). Than its supporting surface 13 rolls on the supporting surface 3 of stock 2. The movement of the contact element 11 causes rolling of the supporting surface 14 on the supporting surface 5 of the stock 4 and thereby moves the end element 6 down.

If great forces for return AFM to its initial position are not necessary, then AFM may not contain the contact element 11, and its return can be made by retaining elements 10.

It is obvious that the contact element 7 makes a complicated movement: turning around its own geometrical axis, which moves by circle, whereas the end elements 1 and 6 make translational movements. Therefore, construction of the supporting surfaces 3, 5, 8, 9 and 16 with possibility to carry a torque, allows to receive a power of rotative movement from the drive element 15, or on the contrary to drive AFM by turning of the drive element 15.

A mashine with AFM not claimed for example such as shown in Fig. 6) can function as followed. Power is transmitted by a crank mechanism 17 to the end element 1, which is common for AFMs 18 and 19, whereas that movement through suppirting axoids without slipping is transmitted to working element 20 with force increasing to end of stroke.

Use of AFM allows to reduce wear-and-tear of supporting surfaces and a loss of power on friction due to replacement of slipping by rolling, to mitigate problems of lubrication substantially, and to increase force capability and durability without increasing of dimensions.

For example producing of supporting parts of AFM from steel for boll or roll bearings with admissable contact endurance about 30000 [kg/square centimeter] when contact takes place by line (D.N. Reshetov, Details of Mashines, Moscow, Mashinery, 1974, page 507) allows to increase force in mechanisms in 6.13 times in comparison with the lever mechanism of the same dimension with hinges made from stanniferous bronze with admissable endurance about 100 [kg/square centimeter].

**Claims**

**1.**    Axoid Force Mechanism, comprising two end elements (1, 6), which are connected with an intermediate chain for transmission of movement and are provided by supporting surfaces (3, 5) and are constructed for exclusively translational movements with forces and speeds in accordance with formulas:

$$P_2 = P_1(\sin\alpha_1/\sin\alpha_2) + \Delta P; \qquad V_2 = V_1(\cos\alpha_1/\cos\alpha_2);$$

where: $P_2$, $P_1$ are the forces on the end elements (1, 6); $V_2$, $V_1$ are the speeds of the end elements (1, 6); $\alpha_2$, $\alpha_1$ are angles, which are formed by the flat containing the geometrical axises of the supporting surfaces of the end element (1, 6) and directions of the end element (1, 6) movement, and $\Delta LP$ is reduction of force due to friction, **characterized in that**
the intermediate chain consists of at least one contact element (7, 12) with supporting surfaces (8, 9, 13, 14), which as well as the supporting surfaces (3, 5) of the end elements (1, 6), are constructed and placed so, that, when one of the end elements (1, 6) fulfil the translational movement, the supporting surfaces (3, 5, 8, 9, 13, 14) make rolling without slipping and transmit forces and movement to the other end element (1, 6), and moreover curvature radiuses of supporting surfaces (3, 5, 8, 9, 13, 14) in each succession thereof, including supporting surfaces (3, 5) of the end elements (1, 6) transmitting satisfy the following formula:

$$\prod_{j=1}^{k+1}\left(-\frac{\rho_{(2j-1)}}{\rho_{(2j)}}\right)=1$$

where: $k$ is number of contact elements (7, 12) in this succession; $\rho_{(2j-1)}$, $\rho_{(2j)}$ are curvature radiuses of the supporting surfaces (3, 5, 8, 9, 13, 14) in area of **j**-th contact.

2. Axoid Force Mechanism as defined in claim 1, **characterized in that** the supporting surfaces (3, 5, 8, 9, 13, 14) of the end and the contact elements are round cylinders or their parts and are placed so, that their geometrical axises and the lines of their contact are placed in one common flat.

3. Axoid Force Mechanism as defined in claim 2, **characterized in that** the intermediate chain consists of the one contact element (7) with the supporting surfaces (8, 9) which are placed between supporting surfaces (3, 5) of the end elements (1, 6) with opportunity to contact with them, and additional retaining elements (10) for supporting the end and contact elements (1, 6, 7) in interaction.

4. Axoid Force Mechanism as defined in claim 2, **characterized in that** an intermediate chain consists of one contact element (12) with the supporting surfaces (13, 14) between which the supporting surfaces (3, 5) of the end elements (1, 6) are placed with opportunity of contact with them, and additional retaining elements (10) for supporting the end and contact elements (1, 6, 12) in interaction.

5. Axoid Force Mechanism as defined in claim 2, **characterized in that** an intermediate chain consists of two contact elements (7, 12), where supporting surfaces (8, 9) of one (7) of the contact elements (7, 12) are placed between supporting surfaces (3, 5) of the end elements (1, 6) which are placed between supporting surfaces (13, 14) of the other contact element (12) with opportunity of contact with them.

6. Axoid Force Mechanism defined in any of claims 1 - 5, **characterized in that** the supporting surfaces (3, 5, 8, 9, 13, 14) of the end and contact elements (1, 6, 7, 12) are constructed with possibility of torque transmission.

**Patentansprüche**

1. Axoidkraftmechanismus mit zwei Endelementen (1, 6), die mit einer Zwischenkette für eine Bewegungsübertragung verbunden und mit Auflageoberflächen versehen sind und ausschließlich Translationsbewegungen mit Kräften und Geschwindigkeiten gemäß den Formeln aufgebaut sind:

$$P_2 = P_1(\sin\alpha_1/\sin\alpha_2) + \Delta P; \qquad V_2 = V_1(\cos\alpha_1/\cos\alpha_2);$$

wobei $P_2$, $P_1$ die Kräfte an den Endelementen (1, 6) sind; $V_2$, $V_1$ die Geschwindigkeiten der Endelemente (1, 6) sind; $\alpha_2$, $\alpha_1$ die Winkel sind, die durch die Ebene, die die geometrischen Achsen der Auflageflächen des Endelements (1, 6) enthält, und die Richtungen der Bewegung des Endelements (1, 6) gebildet werden, und $\Delta P$ die Reduzierung der Kraft aufgrund von Reibung ist, **dadurch gekennzeichnet, dass**

die Zwischenkette aus wenigstens einem Kontaktelement (7, 12) mit Auflageflächen (8, 9, 13, 14) besteht, die wie die Auflageflächen (3, 5) der Endelemente (1, 6) so ausgebildet und angeordnet sind, dass wenn eines der Endelemente (1, 6) die Translationsbewegung ausführt, die Auflageflächen (3, 5, 8, 9, 13, 14) ohne Schlupf wälzen und die Kräfte und Bewegung auf das andere Endelement (1, 6) übertragen, und darüber hinaus die Krümmungsradien der Auflageflächen (3, 5, 8, 9, 13, 14) in jeder Abfolge, einschließlich der Auflageflächen (3, 5) der übertragenden Endelemente (1, 6), der folgenden Formel genügen:

$$\prod_{j=1}^{k+1}\left(-\frac{\rho(2j-1)}{\rho(2j)}\right)=1$$

wobei $k$ die Anzahl der Kontaktelemente (7, 12) in dieser Abfolge ist; $\rho(2j\text{-}1)$, $\rho(2j)$ die Krümmungsradien der Auflageflächen (3, 5, 8, 9, 13, 14) im Bereich des j-ten Kontakts sind.

2. Axoidkraftmechanismus nach Anspruch 1, **dadurch gekennzeichnet, dass** die Auflageflächen (3, 5, 8, 9, 13, 14) der End- und der Kontaktelemente runde Zylinder oder Teile davon sind und so angeordnet sind, dass ihre geometrischen Achsen und ihre Kontaktlinien in einer gemeinsamen Ebene angeordnet sind.

3. Axoidkraftmechanismus nach Anspruch 2, **dadurch gekennzeichnet, dass** die Zwischenkette aus dem einen Kontaktelement (7) mit den Auflageflächen (8, 9), die zwischen den Auflageflächen (3, 5) der Endelemente (1, 6) so angeordnet sind, dass sie diese kontaktieren können, und zusätzlichen Halteelementen (10) zum gegenseitigen Halten der End- und der Kontaktelemente (1, 6, 7) besteht.

4. Axoidkraftmechanismus nach Anspruch 2, **dadurch gekennzeichnet, dass** eine Zwischenkette aus einem Kontaktelement (12) mit den Auflageflächen (13, 14), zwischen denen die Auflageflächen (3, 5) der Endelemente (1, 6) so angeordnet sind, dass sie diese kontaktieren können, und zusätzlichen Halteelementen (10) zum gegenseitigen Halten der End- und der Kontaktelemente (1, 6, 12) besteht.

5. Axoidkraftmechanismus nach Anspruch 2, **dadurch gekennzeichnet, dass** eine Zwischenkette aus zwei Kontaktelementen (7, 12) besteht, wobei die Auflageflächen (8, 9) des einen (7) der beiden Kontaktelemente (7, 12) zwischen den Auflageflächen (3, 5) der Endelemente (1, 6) angeordnet sind, die zwischen den Auflageflächen (13, 14) des anderen Kontaktelements so angeordnet sind, dass sie diese kontaktieren können.

6. Axoidkraftmechanismus nach einem der Ansprüche 1 bis 5, **dadurch gekennzeichnet, dass** die Auflageflächen (3, 5, 8, 9, 13, 14) der End- und der Kontaktelemente (1, 6, 7, 12) so ausgebildet sind, dass sie ein Drehmoment übertragen können.

## Revendications

1. Mécanisme de Force Axoïdien, comprenant deux éléments d'extrémité (1, 6) qui sont reliés à une chaîne intermédiaire afin de transmettre un mouvement, sont pourvus de surfaces d'appui (3, 5) et sont construits exclusivement pour des mouvements de translation avec des forces et des vitesses satisfaisant aux formules :

$$P_2 = P_1(\sin \alpha_1/\sin\alpha_2) + \Delta P ; \qquad V_2 = V_1(\cos \alpha_1/\cos \alpha_2),$$

dans lesquelles : $P_2$, $P_1$ sont les forces exercées sur les éléments d'extrémité (1, 6) ; $V_2$, $V_1$ sont les vitesses des éléments d'extrémité (1, 6) ; $\alpha_1$, $\alpha_2$ sont les angles formés par le plan contenant les axes géométriques des surfaces d'appui de l'élément d'extrémité (1, 6) et les directions de mouvement de l'élément d'extrémité (1, 6) et $\Delta P$ est la réduction de la force due au frottement, **caractérisé en ce que**
la chaîne intermédiaire consiste en au moins un élément de contact (7, 12) pourvu de surfaces d'appui (8, 9, 13, 14) qui, tout comme les surfaces d'appui (3, 5) des éléments d'extrémité (1, 6), sont construites et situées de manière à ce que, lorsqu'un des éléments d'extrémité (1, 6) exécute le mouvement de translation, les surfaces d'appui (3, 5, 8, 9, 13, 14) exécutent un roulement sans glissement et transmettent les forces et le mouvement à l'autre élément d'extrémité (1, 6) et, en outre, les rayons de courbure des surfaces d'appui (3, 5, 8, 9, 13, 14) dans chaque série, incluant les surfaces d'appui (3, 5) des éléments d'extrémité (1, 6) participant à la transmission, satisfont à la formule suivante :

$$\prod_{j=1}^{k+1} \left(-\frac{\rho_{(2j-1)}}{\rho_{(2j)}}\right) = 1$$

dans laquelle: k est le nombre d'éléments de contact (7, 12) dans cette série ; $\rho_{(2j-1)}$, $\rho_{(2j)}$ sont les rayons de courbure des surfaces d'appui (3, 5, 8; 9, 13, 14) dans la zone du j$^{\text{ème}}$ contact.

2. Mécanisme de Force Axoïdien selon la revendication 1, **caractérisé en ce que** les surfaces d'appui (3, 5, 8, 9, 13, 14) des éléments d'extrémité et de contact sont des cylindres ronds ou des parties de cylindre rond et sont disposées de manière à ce que leurs axes géométriques et leurs lignes de contact soient situés dans un plan commun.

3. Mécanisme de Force Axoïdien selon la revendication 2, **caractérisé en ce que** la chaîne intermédiaire est constituée de l'élément de contact (7) avec les surfaces d'appui (8, 9) qui sont disposées entre les surfaces d'appui (3, 5) des éléments d'extrémité (1, 6) et ont la possibilité d'entrer en contact avec ces dernières, et d'éléments de retenue (10) supplémentaires servant à supporter les éléments d'extrémité et de contact (1, 6, 7) en interaction.

4. Mécanisme de Force Axoïdien selon la revendication 2, **caractérisé en ce qu'**une chaîne intermédiaire est constituée d'un élément de contact (12) avec les surfaces d'appui (13, 14) entre lesquelles sont disposées les surfaces d'appui (3, 5) des éléments d'extrémité (1, 6) qui ont la possibilité d'entrer en contact avec elles, et d'éléments de retenue (10) supplémentaires servant à supporter les éléments d'extrémité et de contact (1, 6, 12) en interaction.

5. Mécanisme de Force Axoïdien selon la revendication 2, **caractérisé en ce qu'**une chaîne intermédiaire est constituée de deux éléments de contact (7, 12), où les surfaces d'appui (8, 9) de l'un (7) des éléments de contact (7, 12) sont disposées entre les surfaces d'appui (3, 5) des éléments d'extrémité (1, 6) qui sont disposées entre les surfaces d'appui (13, 14) de l'autre élément de contact (12) avec la possibilité d'entrer en contact avec ces dernières.

6. Mécanisme de Force Axoïdien selon l'une quelconque des revendications 1-5, **caractérisé en ce que** les surfaces d'appui (3, 5, 8, 9, 13, 14) des éléments d'extrémité et de contact (1, 6, 7, 12) sont construites de manière à permettre la transmission d'un couple.

Fig. 1

Fig. 2

EP 0 916 870 B1

Fig. 3

Fig. 4

Fig. 5

Fig. 6